# EUROPEAN PATENT APPLICATION

(11) **EP 4 513 428 A1**
(43) Date of publication of application: **26.02.2025**
(21) Application number: 23790899.1
(22) Date of filing: 02.03.2023
(51) Int. Cl.: G06T 7/00

(54) **METHOD, APPARATUS AND SYSTEM FOR TESTING CATHODE ELECTRODE SHEET OF COMPOSITE STRIP**

(30) Priority: 18.04.2022 CN 202210405673
(71) Applicant: Contemporary Amperex Technology Co., Limited, Ningde, Fujian 352100 (CN)
(72) Inventor: ZHAO, Baiquan, Ningde, Fujian 352100 (CN); NI, Dajun, Ningde, Fujian 352100 (CN); FENG, Shiping, Ningde, Fujian 352100 (CN); LI, Hongyuan, Ningde, Fujian 352100 (CN); XIE, Xianfeng, Ningde, Fujian 352100 (CN); DAI, Ya, Ningde, Fujian 352100 (CN)
(74) Representative: Ran, Handong
(86) International application number: PCT/CN2023/079378
(87) International publication number: WO 2023/202236

(57) **Abstract**

Provides in the present application are a method, apparatus and system for testing a cathode electrode sheet of a composite strip, an electronic device, a stacking machine, a computer-readable storage medium and a computer program product. The method comprises: by using a camera apparatus, photographing a composite strip conveyed on a stacking machine, so as to acquire a test image comprising the composite strip, the test image comprising an electrode sheet body region; extracting the electrode sheet body region from the test image; and testing the electrode sheet body region to determine a metal exposure defect in the electrode sheet body region. The technical solution of the embodiments of the present application can test a composite strip conveyed on a stacking machine, thus detecting a metal exposure defect in a cathode electrode sheet in real time during a production process of a stacked cell assembly.

## Description

### CROSS-REFERENCE TO RELATED APPLICATIONS

This application refers to Chinese Patent Application No. 202210405673.X, filed on April 18, 2022 and entitled "METHOD, APPARATUS, AND SYSTEM FOR INSPECTING CATHODE ELECTRODE PLATE OF COMPOSITE MATERIAL TAPE", which is incorporated herein by reference in its entirety.

### TECHNICAL FIELD

This application relates to the field of battery technologies, in particular, to the field of battery production inspection technologies, and specifically, to a method, apparatus, and system for inspecting a cathode electrode plate of a composite material tape, an electronic device, a laminator, a computer-readable storage medium, and a computer program product.

### BACKGROUND

A rechargeable battery may include a plurality of battery cells connected in series and/or in parallel. The battery cell is the smallest unit that provides an energy source in the battery. A cell assembly is a key component in which electrochemical reactions occur in a battery cell, and its main structure includes an anode electrode plate, a cathode electrode plate, and a separator separating the anode electrode plate from the cathode electrode plate. According to different production processes, cell assemblies may be divided into laminated cell assemblies and wound cell assemblies. Compared with a wound cell assembly, a laminated cell assembly has the characteristics of high capacity, low internal resistance, and adaptivity to more shape designs, so the application scenarios are more extensive. A lamination process of the laminated cell assembly is mainly carried out in a laminator.

How the production yield rate of laminated cell assemblies is improved is an urgent technical problem to be solved in this field.

### SUMMARY

This application is intended to solve at least one of the technical problems existing in some cases. Therefore, one objective of this application is to provide a method, apparatus, and system for inspecting a cathode electrode plate of a composite material tape, an electronic device, a laminator, a computer-readable storage medium, and a computer program product.

An embodiment of a first aspect of this application provides a method for inspecting a cathode electrode plate of a composite material tape. The method includes: using a camera apparatus to photograph a composite material tape being transported on a laminator to obtain an inspection image covering the composite material tape, where the inspection image includes an electrode plate body region; extracting the electrode plate body region from the inspection image; and inspecting the electrode plate body region to determine a metal leakage defect existing in the electrode plate body region.

In the technical solution of the embodiments of this application, an inspection can be performed on a composite material tape being transported on a laminator, so that whether a metal leakage defect exists on a cathode electrode plate can be detected in real time in the production process of a laminated cell assembly. Thus, the efficiency of detecting the metal leakage defect of the cathode electrode plate is improved; and in addition, timely detection of the metal leakage defect in the production process of the laminated cell assembly can also reduce material waste in subsequent production processes.

In some embodiments, the inspecting the electrode plate body region to determine a metal leakage defect existing in the electrode plate body region includes: inspecting based on a pixel value of the electrode plate body region. A pixel value in the inspection image is easy to obtain and calculate, therefore, a metal leakage inspection can be carried out efficiently on the electrode plate body region based on the pixel value of the electrode plate body region. When a metal leakage region exists in the electrode plate body region, a pixel value of the metal leakage region will have a certain deviation compared with the pixel value of another normal region. Thus, performing metal leakage inspection based on the pixel value of each electrode plate body region can improve the accuracy of metal leakage inspection.

In some embodiments, the inspecting based on a pixel value of the electrode plate body region includes: determining whether the electrode plate body region includes at least one suspected defect region, and a pixel value of any pixel in each suspected defect region is within a first pixel value range; and in response to determining that the electrode plate body region includes at least one suspected defect region and that the at least one suspected defect region meets a preset condition, determining that a metal leakage defect exists in the electrode plate body region. When a suspected defect region is detected, it means that an area of the metal leakage region may be larger than an area required by the process. Determining that metal leakage exists in a suspected defect region only when the region meets the preset condition can not only accurately detect a metal leakage region that does not meet the process requirements, but also avoid false detection, thus further improving the inspection efficiency of metal leakage.

In some embodiments, the preset condition includes: an area of any one of the suspected defect regions is greater than a preset threshold. When an area of the detected suspected defect region is greater than the preset threshold (for example, the leakage metal area threshold required by the process), it means that the area of the metal leakage region does not meet the process requirements.

In some embodiments, the determining whether the electrode plate body region includes at least one suspected defect region includes: in the electrode plate body region, obtaining a plurality of abnormal pixels with pixel values within the first pixel value range; and dividing the plurality of abnormal pixels so that adjacent pixels in the plurality of abnormal pixels are located in at least one suspected defect region which is independently connected. Thus, when there are a large number of pixels with pixel values within the first pixel value range in the electrode plate body region, through the division of adjacent pixels in the plurality of pixels into at least one suspected defect region which is independently connected, whether each suspected defect region is a metal leakage region can be determined independently, and the accuracy of metal leakage inspection can be further improved.

In some embodiments, the camera apparatus is a line-scan camera, and the inspection image is a continuously scanned image of the composite material tape being transported on the laminator. Moreover, the extracting the electrode plate body region from the inspection image includes: intercepting at least one image slice from the inspection image; and extracting the electrode plate body region from the image slice. A line-scan camera is more applicable to a situation where there is relative motion between an object being inspected and the camera, and a higher resolution and a larger field of view can be obtained, thus further improving the accuracy of metal leakage inspection.

In some embodiments, the inspection image further includes a separator region surrounding the electrode plate body region, a backup roller region at least partially surrounding the separator region, and a plurality of tab regions located at two sides of the separator region, where the extracting the electrode plate body region from the inspection image includes: at least based on pixel values of a plurality of pixels included in the inspection image, extracting the electrode plate body region from the inspection image. Pixel values of the pixels corresponding to the backup roller region, the plurality of tab regions, and the electrode plate body region in the inspection image are different, therefore, at least based on the pixel values of these regions, removing the backup roller region and the plurality of tab regions contained in the inspection image can extract the electrode plate body region quickly and accurately, and reduce interference of the backup roller region and the plurality of tab regions on the metal leakage inspection, thereby further improving the accuracy of metal leakage inspection.

In some embodiments, the at least based on pixel values of a plurality of pixels included in the inspection image, extracting the electrode plate body region from the inspection image includes: based on a first pixel threshold corresponding to the backup roller region, removing the backup roller region from the inspection image to obtain a first intermediate image; extracting, from the first intermediate image, an image of a largest rectangular region inscribed with an edge thereof, as a second intermediate image to remove the plurality of tab regions; and based on a second pixel threshold corresponding to the electrode plate body region, extracting the electrode plate body region from the second intermediate image. Thus, the backup roller region and the plurality of tab regions can be gradually removed, and in addition, the manner of removing the plurality of tab regions is more accurate. This further improves the accuracy of extracting the electrode plate body region and the accuracy of metal leakage inspection.

In some embodiments, the using a camera apparatus to photograph a composite material tape being transported on a laminator to obtain an inspection image covering the composite material tape includes: using the camera apparatus to photograph each side of the composite material tape being transported on the laminator to obtain the inspection image covering the composite material tape. Thus, metal leakage inspection can be carried out on each side of the composite material tape.

In some embodiments, the method for inspecting a cathode electrode plate of a composite material tape further includes: in response to determining that a metal leakage defect exists in the electrode plate body region, outputting an inspection result, where the inspection result includes at least one of position information of the electrode plate body region in the composite material tape and an area of the electrode plate body region. Thus, this is beneficial for timely understanding the situations, such as location and area, of the metal leakage region in the composite material tape, which can assist in analyzing the causes of metal leakage and making timely adjustments to the relevant components of the laminator.

An embodiment of a second aspect of this application provides an apparatus for inspecting a cathode electrode plate of a composite material tape. The apparatus includes: an image acquisition unit, configured to use a camera apparatus to photograph a composite material tape being transported on a laminator to obtain an inspection image covering the composite material tape, where the inspection image includes an electrode plate body region; a region extraction unit, configured to extract the electrode plate body region from the inspection image; and a metal leakage inspection unit, configured to inspect the electrode plate body region to determine a metal leakage defect existing in the electrode plate body region.

An embodiment of a third aspect of this application provides an electronic device including at least one processor and a memory communicatively connected to the at least one processor, where the memory stores instructions that are executable by the at least one processor, and the instructions are executed by the at least one processor to enable the at least one processor to perform the method for inspecting a cathode electrode plate of a composite material tape according to the foregoing aspect.

An embodiment of a fourth aspect of this application provides a system for inspecting a cathode electrode plate of a composite material tape. The system includes: at least one camera apparatus, configured to photograph the composite material tape being transported on a laminator; and the electronic device according to the foregoing aspect. Thus, metal leakage inspection can be performed on a composite material tape being transported on a laminator, so that whether a metal leakage defect exists on a cathode electrode plate can be detected in real time in the production process of a laminated cell assembly. This improves the efficiency of detecting the metal leakage defect of the electrode plate; and in addition, timely detection of the metal leakage defect in the production process of the laminated cell assembly can also reduce material waste in subsequent production processes.

In some embodiments, the at least one camera apparatus includes a first line-scan camera configured to photograph a first side surface of the composite material tape and a second line-scan camera configured to photograph a second side surface of the composite material tape opposite the first side surface. In addition, the system further includes a first line light source for providing illumination to an image acquisition region of the first line-scan camera and a second line light source for providing illumination to an image acquisition region of the second line-scan camera. A line-scan camera is more applicable to a situation where there is relative motion between an object being inspected and the camera, and a higher resolution and a larger field of view can be obtained. A line light source is configured to provide illumination for the line-scan camera.

In some embodiments, the system for inspecting a cathode electrode plate of a composite material tape further includes: a first backup roller, where the first backup roller is configured to abut against the second side surface of the composite material tape in the image acquisition region of the first line-scan camera; a first encoder connected to the first backup roller, where the first encoder is configured to send a pulse signal to the first line-scan camera along with the progressing of the composite material tape on the first backup roller, so as to trigger the first line-scan camera to photograph the first side surface of the composite material tape line by line; a second backup roller, where the second backup roller is configured to abut against the first side surface of the composite material tape in the image acquisition region of the second line-scan camera; and a second encoder connected to the second backup roller, where the second encoder is configured to send a pulse signal to the second line-scan camera along with the progressing of the composite material tape on the second backup roller, so as to trigger the second line-scan camera to photograph the second side surface of the composite material tape line by line. The first backup roller and the second backup roller can tighten the composite material tape, which is beneficial for accurately capturing an image of the composite material tape, thus improving the accuracy of defect inspection.

An embodiment of a fifth aspect of this application provides a laminator including the system according to the foregoing aspect. In the lamination process of the laminator, a metal leakage defect of the composite material tape can be detected, which is beneficial for adjusting the related components of the laminator in time.

An embodiment of a sixth aspect of this application provides a computer-readable storage medium storing computer instructions, where the computer instructions are configured to enable a computer to perform the method for inspecting a cathode electrode plate of a composite material tape according to the foregoing aspect.

An embodiment of a seventh aspect of this application provides a computer program product including a computer program, where when the computer program is executed by a processor, the method for inspecting a cathode electrode plate of a composite material tape according to the foregoing aspect is implemented.

In the foregoing embodiments of this application, a metal leakage defect of the composite material tape can be detected in the lamination process, which is beneficial for adjusting the related components of the laminator in time. This can effectively control the flow-out of cell assemblies with a metal leakage defect in the separator and reduce material waste during production.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

In the accompanying drawings, unless otherwise specified, the same reference signs in a plurality of accompanying drawings denote the same or similar components or elements. The accompanying drawings are not necessarily drawn to scale. It should be understood that these accompanying drawings merely describe some embodiments disclosed in this application, and should not be construed as a limitation on the scope of this application. To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic exploded view of a laminated cell assembly;
FIG. 2 is a structural block diagram of a laminator in the related art;
FIG. 3 is a schematic structural diagram of a system for inspecting a cathode electrode plate of a composite material tape according to some embodiments of this application;
FIG. 4 is a schematic diagram of an image slice according to some embodiments of this application;
FIG. 5 is a schematic flowchart of a method for inspecting a cathode electrode plate of a composite material tape according to some embodiments of this application;
FIG. 6 is a schematic diagram of inspection on a cathode electrode plate of a composite material tape according to some embodiments of this application;
FIG. 7 is a schematic flowchart of a part of a method for inspecting a cathode electrode plate of a composite material tape according to some embodiments of this application;
FIG. 8 is another schematic diagram of inspection on a cathode electrode plate of a composite material tape according to some embodiments of this application;
FIG. 9 is a structural block diagram of an apparatus for inspecting a cathode electrode plate of a composite material tape according to some embodiments of this application; and
FIG. 10 is a structural block diagram of a laminator according to some embodiments of this application.

### Description of reference signs:

100. laminated cell assembly; 110. anode electrode plate; 111. anode electrode plate body; 112. anode tab; 120. cathode electrode plate; 121. cathode electrode plate body; 122. cathode tab; 130. separator;
200. laminator; 210. first cutting mechanism; 220. first thermal compounding mechanism; 230. second cutting mechanism; 240. second thermal compounding mechanism; 250. laminating mechanism;
300. system; 310. first camera apparatus; 320. second camera apparatus; 330. first line light source; 340. second line light source; 350. first backup roller; 360. second backup roller; 370. first encoder; 380. second encoder; 390. electronic device;
400. image slice; 410. separator region; 420. cathode electrode plate body region; 430. tab region; 440. backup roller region; 450. continuous image; 460a, 460b, 460c. suspected defect region; 4100. tab and separator overlapping region;
810. first intermediate image; 820. second intermediate image;
901. image acquisition unit; 902. region extraction unit; 903. metal leakage inspection unit;
1000. laminator; 1010. first cutting mechanism; 1020. first thermal compounding mechanism; 1030. second cutting mechanism; 1040. second thermal compounding mechanism; and 1050. laminating mechanism.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

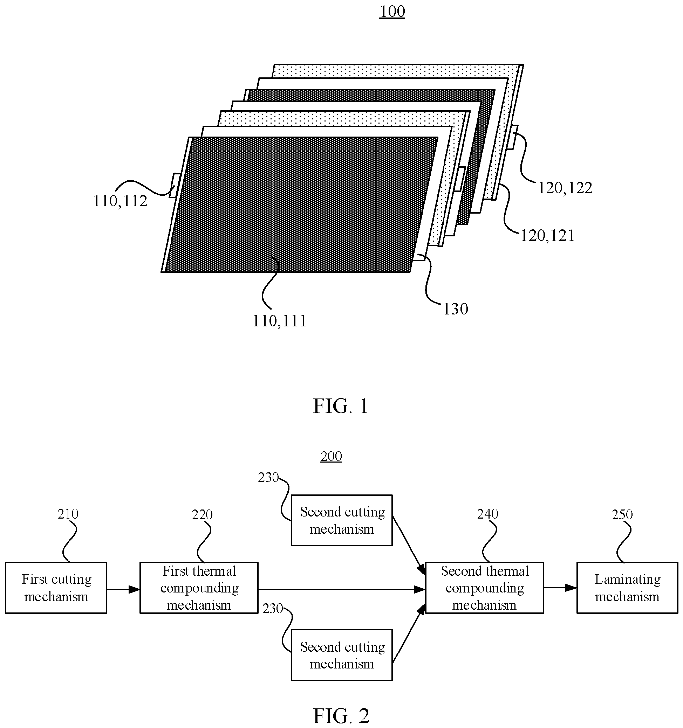

As shown in FIG. 1, a laminated cell assembly 100 includes a plurality of anode electrode plates 110 and a plurality of cathode electrode plates 120 alternately arranged, and a separator 130 arranged between any adjacent anode electrode plate 110 and cathode electrode plate 120. The anode electrode plate 110 includes an anode electrode plate body 111 provided with an active substance and an anode tab 112 not provided with an active substance layer, and the cathode electrode plate 120 includes a cathode electrode plate body 121 provided with an active substance and a cathode tab 122 not provided with an active substance layer. Inside a lithium-ion battery cell (hereinafter referred to as a battery cell for short), the laminated cell assembly 100 is infiltrated by an electrolyte. Lithium ions move between the anode and cathode of the battery cell with the electrolyte as a medium, so that the battery cell can be charged and discharged. The function of the separator 130 is to allow lithium ions to pass freely while preventing the passage of electrons, thereby preventing a short circuit between the anode and cathode of the battery cell through the electrolyte.

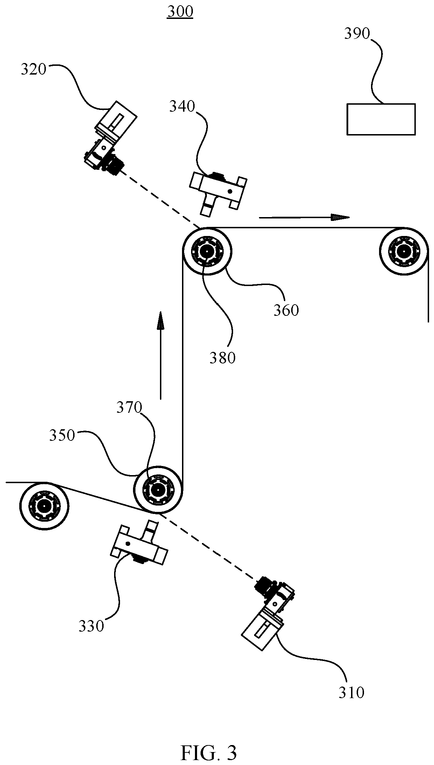

A lamination process of the laminated cell assembly is mainly carried out in a laminator. As shown in FIG. 2, in the related art, the laminator 200 includes a first cutting mechanism 210, a first thermal compounding mechanism 220, two second cutting mechanisms 230, a second thermal compounding mechanism 240, and a laminating mechanism 250 which are arranged in sequence. The first cutting mechanism 210 is configured to cut out a first electrode plate material segment from a first electrode plate material tape. The first thermal compounding mechanism 220 is configured to thermally compound a first separator and a second separator with two side surfaces of the first electrode plate material segment to form a primary composite material tape. The two second cutting mechanisms 230 are configured to cut out a second electrode plate and a third electrode plate from a second electrode plate material tape and a third electrode plate material tape respectively. The second electrode plate material tape and the third electrode plate material tape have a same polarity (they can be made of a same material and have a same structure), which is opposite a polarity of the first electrode plate material tape. The second thermal compounding mechanism 240 is configured to alternately thermally compound the second electrode plate and the third electrode plate with two side surfaces of the primary composite material tape to form a secondary composite material tape (hereinafter referred to as a composite material tape for short, and its cross-sectional structure is, for example, shown in FIG. 3). The laminating mechanism 250 is configured to laminate and cut the composite material tape to form a laminated assembly.

The laminating mechanism 250 of the laminator 200 folds a unit to be cut in a zigzag folding mode and cuts it to obtain a laminated assembly. After that, subsequent production processes for the cell assembly can be carried out, such as thermal compression and tab welding.

In the related art, quality inspection of a laminated cell assembly is arranged after a lamination process. Generally, an X-ray imager is used to scan around the laminated cell assembly, and then whether a defect exists in an electrode plate of the laminated cell assembly is determined according to a scanned image. The working principle of the X-ray imager is that: when X-rays irradiate a sample, their transmission intensity depends not only on the energy of the X-rays but also on the material density and thickness of the sample. A lower material density and a smaller thickness allow the X-rays to pass through the sample more easily. After the X-rays irradiate the sample, the transmission intensity of the X-rays is imaged by using an image receiving and converting apparatus based on brightness and darkness contrast of grayscale, thus forming an X-ray scanned image.

The applicant of this application has noticed that during the transportation of a composite material tape in a laminator, metal leakage (that is, detachment of an active substance layer on a cathode electrode plate body) may occur due to foreign objects, rolling, improper tensioning force on the transmission rollers, or other mechanical reasons. Even if some relevant technologies can detect metal leakage defects in cell assemblies through appropriate means, however, due to lag in detection feedback, relevant personnel cannot promptly adjust the laminator in time. When a metal leakage defect on a cathode electrode plate is discovered, the laminator may have already produced a large quantity of such cathode electrode plates, potentially resulting in significant production material waste. How the production yield rate of laminated cell assemblies is improved has become an urgent technical problem to be solved by persons skilled in the art.

Based on the foregoing technical problem, the applicant, after in-depth research, has provided a method, apparatus, and system for inspecting a cathode electrode plate of a composite material tape, an electronic device, a laminator, a computer-readable storage medium, and a computer program product. This solution can implement real-time and accurate inspection of whether a metal leakage defect exists on the cathode electrode plates during the production process of laminated cell assemblies, thereby improving the production yield rate of laminated cell assemblies.

The solution in embodiments of this application utilizes computer vision technology. Firstly, a camera apparatus is used to photograph a composite material tape being transported on a laminator to obtain an inspection image covering the composite material tape, where the inspection image includes an electrode plate body region; then, the electrode plate body region is extracted from the inspection image; and subsequently, the electrode plate body region is inspected to determine a metal leakage defect existing in the electrode plate body region. In the technical solution of the embodiments of this application, a metal leakage inspection can be performed on a composite material tape being transported on a laminator, so that whether a metal leakage defect exists on a cathode electrode plate can be detected in real time in the production process of a laminated cell assembly. Thus, this improves the efficiency of detecting the metal leakage defect of the electrode plate; and in addition, timely detection of the metal leakage defect in the production process of the laminated cell assembly can also reduce material waste in subsequent production processes.

FIG. 3 shows a system 300 for inspecting a cathode electrode plate of a composite material tape according to some embodiments of this application. The main hardware configuration of the system 300 includes at least one camera apparatus (for example, a first camera apparatus 310 and a second camera apparatus 320) and an electronic device 390. The electronic device 390 is connected to each of the at least one camera apparatus, and is configured to inspect a composite material tape based on image information collected by the camera apparatus (a specific inspection method will be described below).

The first camera apparatus 310 is configured to collect image information on one side surface of the composite material tape, and the second camera apparatus 320 is configured to collect image information on another side surface of the composite material tape. The electronic device 390 is connected to each of the first camera apparatus 310 and the second camera apparatus 320, and is configured to inspect two side surfaces of the composite material tape based on the image information collected by the first camera apparatus 310 or the second camera apparatus 320.

The electronic device 390 may communicate with the first camera apparatus 310 and the second camera apparatus 320 through wired connection or wireless connection. Since a main target of image acquisition performed by the first camera apparatus 310 and the second camera apparatus 320 is the composite material tape, the first camera apparatus 310 and the second camera apparatus 320 may be arranged at an appropriate position between the second thermal compounding mechanism and the laminating mechanism of the laminator.

The specific types of the first camera apparatus 310 and the second camera apparatus 320 are not limited, and a conventional area-scan industrial camera or a line-scan camera may be used.

Thus, through the use of a camera apparatus to photograph a composite material tape being transported on a laminator, and further metal leakage inspection, whether a metal leakage defect exists on a cathode electrode plate can be detected in real time in the production process of a laminated cell assembly.

In some embodiments of this application, the at least one camera apparatus includes a first line-scan camera configured to photograph a first side surface of the composite material tape and a second line-scan camera configured to photograph a second side surface of the composite material tape opposite the first side surface. The system 300 for inspecting the cathode electrode plate of the composite material tape may further include a first line light source 330 for providing illumination to an acquisition region of the first line-scan camera and a second line light source 340 for providing illumination to an acquisition region of the second line-scan camera.

A line-scan camera, also referred to as a line-array camera, is applicable to a situation where there is relative motion between an object being inspected and the camera, and a higher resolution and a larger field of view can be obtained. Theoretically, capturing line by line image information on a moving object being inspected can obtain an infinitely extended continuous image. Through intelligent software processing, an image slice can be intercepted from the continuous image. The electronic device can then perform real-time processing on the image slice or store the image slice in a cache for later processing.

The first line light source 330 and the second line light source 340 are configured to provide illumination for their respective corresponding line-scan cameras. Taking the first line light source 330 and the first line-scan camera as an example, their relative installation positions should meet the following requirement: the first line light source 330 focuses on the composite material tape to form a narrow bright strip which should be parallel to a sensor of the first line-scan camera. This allows the line-scan camera to obtain better image quality. The specific types of the first line light source 330 and the second line light source 340 are not limited, and may be, for example, an LED light source, a halogen lamp, or a high-frequency fluorescent lamp.

As shown in FIG. 3, in some embodiments, the system 300 for inspecting a cathode electrode plate of a composite material tape further includes: a first backup roller 350, a first encoder 370 connected to the first backup roller 350, a second backup roller 360, and a second encoder 380 connected to the second backup roller 360. The first backup roller 350 is configured to abut against the second side surface of the composite material tape in the image acquisition region of the first line-scan camera. The first encoder 370 is configured to send a pulse signal to the first line-scan camera along with the progressing of the composite material tape on the first backup roller 350, so as to trigger the first line-scan camera to photograph the first side surface of the composite material tape line by line. The second backup roller 360 is configured to abut against the first side surface of the composite material tape in the image acquisition region of the second line-scan camera. The second encoder 380 is configured to send a pulse signal to the second line-scan camera along with the progressing of the composite material tape on the second backup roller, so as to trigger the second line-scan camera to photograph the second side surface of the composite material tape line by line.

The encoder can convert a rotation angle into a pulse signal. Taking the first backup roller 350 as an example, when the first backup roller 350 rotates continuously, for every unit angle rotated, the first encoder 370 emits a pulse signal, triggering the first line-scan camera to scan one line on a side surface of the composite material tape.

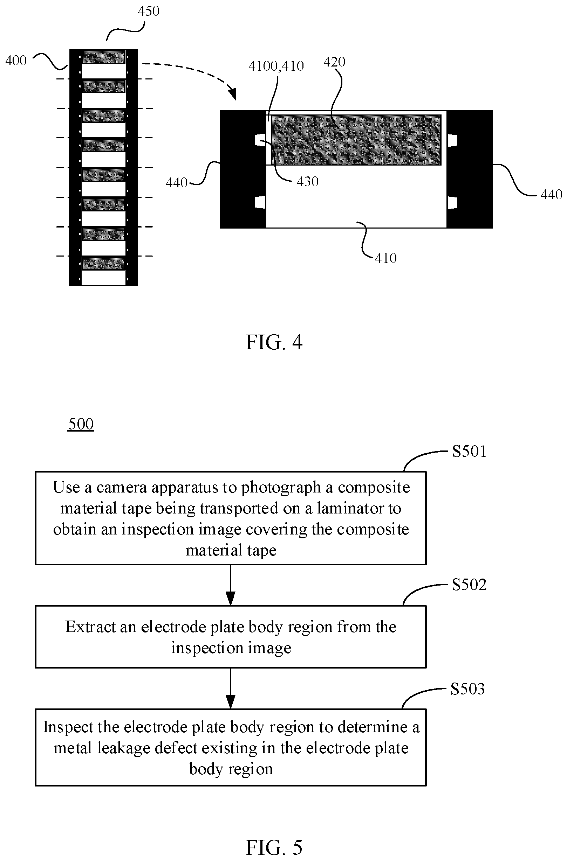

The first backup roller 350 and the second backup roller 360 can tighten the composite material tape, which is beneficial for accurately capturing an image of the composite material tape, thus further improving the accuracy of metal leakage defect inspection. As shown in FIG. 5, the image slice 400 may further include a backup roller region 440 corresponding to the first backup roller 350 and the second backup roller 360.

As shown in FIG. 4, in these embodiments of this application, for each side surface of the composite material tape, from a continuous image 450 thereof, image slices 400 can be continuously and sequentially intercepted. Then, image slices 400 are used to perform metal leakage inspection and analysis on the electrode plate of the composite material tape. As an interception unit, each image slice 400 may include a separator region 410, an electrode plate body region 420 surrounded by the separator region 410, and a plurality of tab regions 430 protruding from the separator region 410. In addition, the image slice 400 may also include an image of another object except for the composite material tape, such as an image of a backup roller, corresponding to the backup roller region 440 in the image slice 400.

In some embodiments, the electrode plate body region 420 may be a body region of a cathode electrode plate exposed on the composite material tape, and a body region of an anode electrode plate is not visible in the image slice 400 because the anode electrode plate is sandwiched between two separators, but the tab region 430 of the anode electrode plate protruding out of the separator region 410 is visible.

It should be noted that the image slice 400 may further include a tab and separator overlapping region 4100 connected between the electrode plate body region 420 and the tab region 430, and the entirety of the tab and separator overlapping region 4100 and the tab region 430 corresponds to a tab of an exposed electrode plate on the composite material tape, that is, the entirety of the electrode plate body region 420, the tab and separator overlapping region 4100, and the tab region 430 corresponds to an exposed electrode plate on the composite material tape. Generally, a tab of an electrode plate is not provided with an active substance layer, and a portion of the electrode plate corresponding to the tab region 430 exposes a current collector of a metal material, and a portion of the electrode plate corresponding to the tab and separator overlapping region 4100 can expose the current collector of the metal material or be provided with a light-colored insulating layer. Generally, a grayscale of the current collector of the metal material or the light-colored insulating layer in the image slice 400 will not be lower than the grayscale of the separator region 410. Therefore, in some embodiments of this application, to simplify the calculation, the tab and separator overlapping region 4100 may be included in the separator region 410, so that the separator region 410 includes the tab and separator overlapping region 4100.

FIG. 5 is a schematic flowchart of a method 500 for inspecting an electrode plate of a composite material tape according to some embodiments of this application. As shown in FIG. 5, the method 500 includes steps S501 to S503.

In step S501, a camera apparatus is used to photograph a composite material tape being transported on a laminator to obtain an inspection image covering the composite material tape, where the inspection image includes an electrode plate body region.

In step S502, the electrode plate body region is extracted from the inspection image.

In step S503, the electrode plate body region is inspected to determine a metal leakage defect existing in the electrode plate body region.

In some examples, the camera apparatus may be an industrial camera or a machine vision camera, for example, the camera apparatus may be an area-scan CCD industrial camera with a high frame rate to obtain a clear inspection image. The camera apparatus may alternatively be the line-scan camera described above.

The inspection image covering the composite material tape obtained by capturing using a camera apparatus may be an inspection image as shown on the right side of FIG. 4.

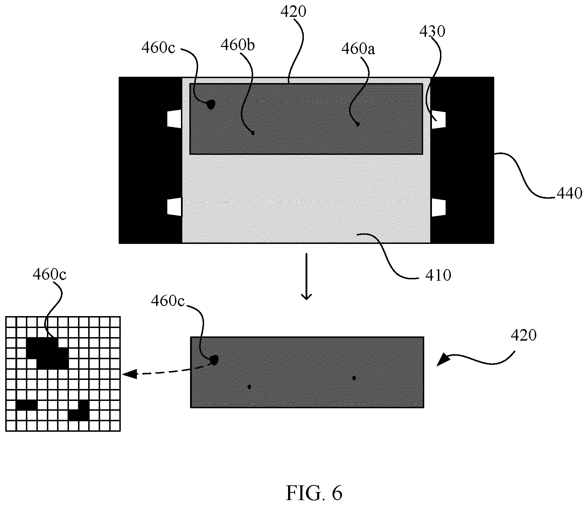

Referring to FIG. 6, according to steps S502 and S503, a cathode electrode plate body region 420 may be extracted from the inspection image, so that inspection can be performed in the body region 420 to determine whether metal leakage exists in the cathode electrode plate body region (for example, in the example of FIG. 6, the body region 420 may include a region 460c where a metal leakage region exists).

In step S502, a corner detection algorithm of computer vision may be used to detect corners of the inspection image obtained in step S501, and in response to detecting corresponding corners at preset positions (for example, positions corresponding to four corners of the region 420), a region surrounded by these corners is determined as the body region 420.

In step S503, the inspection of the cathode electrode plate body region 420 may be to input an image of the cathode electrode plate body region 420 into a pre-trained neural network model to obtain a metal leakage inspection result predicted by the neural network model. Training samples of the neural network model may include samples without metal leakage defects and samples with metal leakage defects.

Thus, the composite material tape being transported on the laminator can be inspected, so that whether there is a metal leakage defect on the cathode electrode plate can be detected in real time in the production process of a laminated cell assembly. Thus, this improves the efficiency of detecting the metal leakage defect of the electrode plate; and in addition, timely detection of the metal leakage defect in the production process of the laminated cell assembly can also reduce material waste in subsequent production processes.

In some embodiments of this application, the foregoing step S503 may include: inspecting based on a pixel value of the electrode plate body region.

A pixel value in the inspection image is easy to obtain and calculate, therefore, an inspection can be carried out efficiently on the electrode plate body region based on the pixel value of the electrode plate body region. When a metal leakage region exists in the electrode plate body region (that is, when the active substance layer of some parts of the cathode electrode plate body region falls off), the pixel value of the metal leakage region will have a certain deviation compared with the pixel value of another normal region (that is, a region in the electrode plate body region where the active substance layer does not fall off). Thus, performing metal leakage inspection based on the pixel value of the electrode plate body region can improve the accuracy of metal leakage inspection.

For example, when the active substance layer falls off, this region will expose a current collector of metal material, and the pixel value of the metal leakage region is smaller than a pixel value of a surrounding normal region. Comparing the pixel values of the two regions can identify a region where metal leakage may exist.

In some embodiments of this application, the inspecting based on a pixel value of the electrode plate body region includes:
determining whether the electrode plate body region includes at least one suspected defect region, and a pixel value of any pixel in each suspected defect region is within a first pixel value range; and in response to determining that the electrode plate body region includes at least one suspected defect region and that the at least one suspected defect region meets a preset condition, determining that a metal leakage defect exists in the electrode plate body region.

Still referring to FIG. 6, in the body region 420, at least one suspected defect region (for example, three suspected defect regions 460a, 460b, and 460c shown in FIG. 6) may be determined first. A pixel value of any pixel in each suspected defect region may be within a first pixel value range. Thus, it can be preliminarily assumed that metal leakage may exist in the three suspected defect regions. Then, in response to determining that at least one suspected defect region (such as the suspected defect region 460c) meets a preset condition (for example, the pixel value of the suspected defect region is less than a preset threshold), it can be determined that metal leakage exists in the cathode electrode plate body region.

In addition, since the other two suspected defect regions 460a and 460b may not meet the above preset condition, the suspected defect regions 460a and 460b may not be determined as metal leakage regions.

When a suspected defect region is detected, it means that an area of the metal leakage region may be larger than an area required by the process. Determining that metal leakage exists in a suspected defect region only when the region meets the preset condition can not only accurately detect a metal leakage region that does not meet the process requirements, but also avoid false detection, thus further improving the inspection efficiency of metal leakage.

In some embodiments of this application, the preset condition includes: an area of any one of the suspected defect regions is greater than a preset threshold.

Thus, when an area of the detected suspected defect region is greater than the preset threshold (for example, a leakage metal area threshold required by the process), it means that the area of the metal leakage region does not meet the process requirements.

For example, in response to determining that an area of at least one suspected defect region is greater than a preset threshold (for example, the suspected defect region 460c occupies an area of 3 square millimeters (mm²), and the preset threshold may be an area of 2 mm²), it is determined that metal leakage exists in the electrode plate body region (that is, the suspected defect region 460c is a metal leakage region). In addition, since the areas occupied by the other two suspected defect regions 460a and 460b are both smaller than the preset threshold (the area of 2 mm²), the suspected defect regions 460a and 460b are not determined as metal leakage regions.

It should be noted that the method of comparing the areas of the foregoing suspected defect regions with the preset threshold has a higher accuracy in metal leakage defect detection when compared with the method of using an X-ray imager to scan around a laminated cell assembly in the related art.

It can be understood that the preset condition is not limited to the above one. For example, an image of the electrode plate body region may also be input into a trained neural network model, and a confidence level output by the neural network model for representing at least one suspected defect region being a defect region (that is, a metal leakage region) is obtained. In this case, the foregoing preset condition may be that the confidence level is greater than a preset confidence level.

In some embodiments of this application, the determining whether the electrode plate body region includes at least one suspected defect region includes:
in the electrode plate body region, obtaining a plurality of abnormal pixels with pixel values within the first pixel value range; and
dividing the plurality of abnormal pixels so that adjacent pixels in the plurality of abnormal pixels are located in at least one suspected defect region which is independently connected.

Still referring to the enlarged view on the left of FIG. 6, first, a plurality of abnormal pixel points with pixel values within the first pixel value range can be obtained. Then, the plurality of abnormal pixels are divided based on a connection operator (connection operator) of machine vision software, so that adjacent pixels among the plurality of abnormal pixels whose pixel values are within the first pixel value range are located in at least one suspected defect region (the suspected defect region 460c and two regions below the suspected defect region 460c) which is independently connected. It can be seen from the figure that a plurality of non-adjacent abnormal pixels are divided to form their own connected domains. Then, based on an area_center operator (region center operator) of the machine vision software, a connected domain with an area larger than an area threshold can be screened out (for example, a connected domain with an area larger than 2 mm² can be screened out).

Thus, when there are a large number of pixels with pixel values within the first pixel value range in the electrode plate body region, through the division of adjacent pixels in the plurality of pixels into at least one suspected defect region which is independently connected, whether each suspected defect region is a metal leakage region can be determined independently, and the accuracy of metal leakage inspection can be further improved.

In some embodiments, the cathode electrode plate body region 420 can be binarized first, and then the above operations can be performed on the binarized electrode plate body region image, thus making the calculation process simpler.

In some embodiments of this application, the camera apparatus is a line-scan camera, and the inspection image is a continuously scanned image of the composite material tape being transported on the laminator. Moreover, step S502 of extracting the electrode plate body region from the inspection image may further include:
intercepting at least one image slice from the inspection image; and
extracting the electrode plate body region from the image slice.

In these embodiments, based on an image slicing algorithm, image slices can be intercepted from a continuous image photographed by a line-scan camera, so as to obtain the inspection image. The specific type of the image slicing algorithm is not limited, for example, it may be a threshold-based slicing algorithm, a region-based slicing algorithm, an edge-based slicing algorithm, or a specific theory-based slicing algorithm. Referring to FIG. 4, in some embodiments of this application, a threshold-based slicing method is adopted. Based on a grayscale difference between the cathode electrode plate body region 420 and the separator region 410, edges of the cathode electrode plate body region 420 along a width direction of the composite material tape are found. Then, based on two adjacent edges of the cathode electrode plate body region 420 along the width direction of the composite material tape, the continuous image 450 is divided along the width direction of the composite material tape (a dividing line can avoid the cathode electrode plate body region 420 and be separated by several rows of pixels from the cathode electrode plate body region 420), to obtain an image slice 400. The image slice 400 is the inspection image.

A line-scan camera is more applicable to a situation where there is relative motion between an object being inspected and the camera, and a higher resolution and a larger field of view can be obtained, thus further improving the accuracy of metal leakage inspection.

In some embodiments of this application, the inspection image may further include a separator region surrounding the electrode plate body region, a backup roller region at least partially surrounding the separator region, and a plurality of tab regions located at two sides of the separator region.

Moreover, the foregoing step S502 of extracting the electrode plate body region from the inspection image may further include: at least based on pixel values of a plurality of pixels included in the inspection image, extracting the electrode plate body region from the inspection image.

Pixel values of the pixels corresponding to the backup roller region, the plurality of tab regions, and the electrode plate body region in the inspection image are different, therefore, at least based on the pixel values of these regions, removing the backup roller region and the plurality of tab regions contained in the inspection image can extract the electrode plate body region quickly and accurately, and reduce interference of the backup roller region and the plurality of tab regions on the metal leakage inspection, thereby further improving the accuracy of metal leakage inspection.

For example, a plurality of pixel threshold ranges a, b, c, and d can be set. In addition, the pixel values of the electrode plate body region, the separator region, the backup roller region, and the tab region can fall into a corresponding pixel value range of each of the foregoing pixel threshold ranges (for example, the pixel value of the electrode plate body region falls into the above range a). Based on the pixel values of the plurality of pixels included in the inspection image, a region where a pixel value falls within the above range a can be extracted as the electrode plate body region.

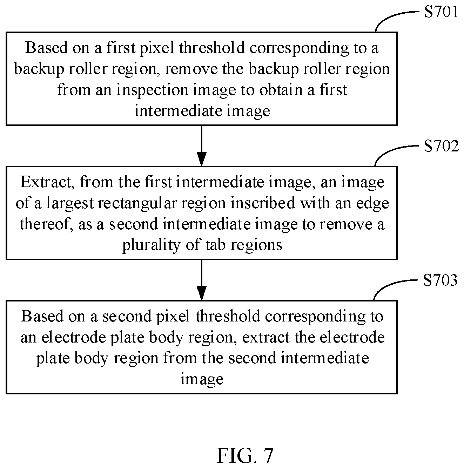

In some embodiments of this application, as shown in FIG. 7, the at least based on pixel values of a plurality of pixels included in the inspection image, extracting the electrode plate body region from the inspection image includes the following steps.

Step S701: Based on a first pixel threshold corresponding to the backup roller region, remove the backup roller region from the inspection image to obtain a first intermediate image.

Step S702: Extract, from the first intermediate image, an image of a largest rectangular region inscribed with an edge thereof, as a second intermediate image to remove the plurality of tab regions.

Step S703: Based on a second pixel threshold corresponding to the electrode plate body region, extract the electrode plate body region from the second intermediate image.

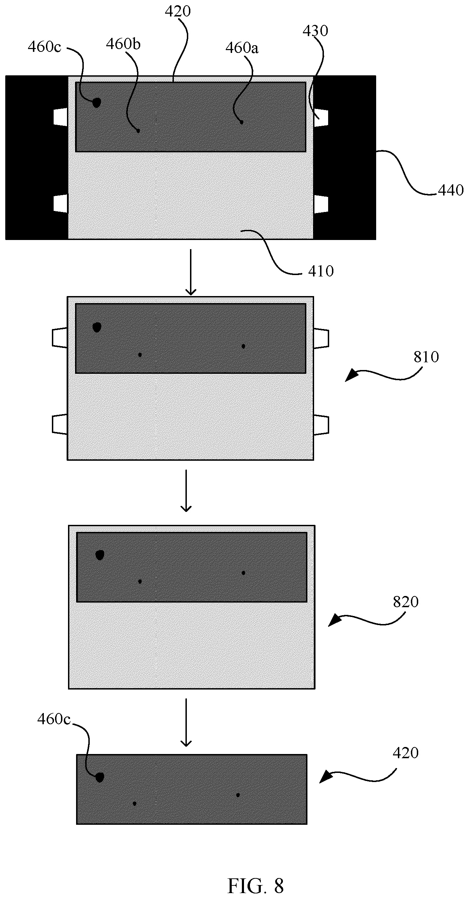

FIG. 8 is another schematic diagram of inspection on a cathode electrode plate of a composite material tape according to some embodiments of this application.

As shown in FIG. 8, in the image slice 400, the grayscale G1 of the tab region 430, the grayscale G2 of the separator region 410, the grayscale G3 of the cathode electrode plate body region, and the grayscale G4 of the backup roller region 440 satisfy G4 < G3 < G2 ≤ G1. Therefore, based on the first pixel threshold (for example, set to 15) corresponding to the backup roller region 440, two backup roller regions 440 can be removed from the image slice 400 (that is, the inspection image) to obtain a first intermediate image 810.

In some embodiments, the grayscale differences between the backup roller region 440 and other regions are used in combination with the Blob algorithm to remove two backup roller regions 440 from the image slice 400, that is, feature regions with grayscale less than or equal to the maximum grayscale threshold of the backup roller region 440 are removed. In computer vision, Blob refers to a connected region in an image, and Blob analysis is to extract and mark a connected domain of a binary image obtained after foreground/background separation. The core idea of the Blob algorithm is to identify, in a region, a range where "grayscale mutation" occurs so as to determine its size, shape, and area. The maximum grayscale threshold of the foregoing backup roller region 440 may be used as the grayscale threshold for binarizing the image slice 400.

In some embodiments of this application, in step S701, first, based on the first pixel threshold (for example, set to 15) corresponding to the backup roller region 440, the image slice 400 is binarized, from which a feature region with a grayscale less than or equal to the first pixel threshold corresponding to the backup roller region 440 is extracted; then, based on a connection operator (connection operator) of the machine vision software, the feature region is divided so that the non-adjacent regions are divided to form their own connected domains; subsequently, based on a select_shape operator (filter operator) of the machine vision software, connected domains (corresponding to the two backup roller regions 440) with areas larger than a preset area threshold are screened out; and then, based on a difference operator (subtraction operator) of the machine vision software, the two backup roller regions 440 are removed from the image slice 400 to obtain the first intermediate image 810.

In some embodiments of this application, in step S702, based on an inner_rectangle1 operator (inscribed rectangle operator) of the machine vision software, the largest inscribed rectangle inscribed with edges of the first intermediate image 810 is calculated. A region of the largest inscribed rectangle (that is, the largest rectangular region) is then intercepted as a second intermediate image 820, thereby the plurality of tab regions 430 are removed.

In some embodiments of this application, in step S703, first, the second intermediate image 820 is binarized, from which a feature region with a grayscale less than or equal to the second pixel threshold (for example, set to 25) corresponding to the foregoing cathode electrode plate body region 420 is extracted; then, based on a opening_rectangle1 operator (opening operation operator) of the machine vision software, opening operation is performed on the feature region to remove noise; subsequently, based on a connection operator (connection operator) of the machine vision software, the feature region is divided so that non-adjacent regions are divided to form their own connected domains; and then, based on a select_shape operator (filter operator) of the machine vision software, a connected domain with a largest area and a rectangle degree greater than a rectangle degree threshold (for example, the rectangle degree is in a range of 0 to 1, and the rectangle degree threshold is set to 0.8) is screened out, which is the cathode electrode plate body region 420.

Thus, the backup roller region and the plurality of tab regions can be gradually removed, and in addition, the manner of removing the plurality of tab regions is more accurate. This further improves the accuracy of extracting the electrode plate body region and the accuracy of metal leakage inspection.

In some embodiments of this application, step S501 of using a camera apparatus to photograph a composite material tape being transported on a laminator to obtain an inspection image covering the composite material tape may include: using the camera apparatus to photograph each side of the composite material tape being transported on the laminator to obtain the inspection image covering the composite material tape. Thus, metal leakage inspection can be carried out on each side of the composite material tape.

In some embodiments of this application, the method for inspecting a cathode electrode plate of a composite material tape may further include: in response to determining that a metal leakage defect exists in the electrode plate body region, outputting an inspection result, where the inspection result includes at least one of position information of the electrode plate body region in the composite material tape and an area of the electrode plate body region.

The position information of the electrode plate body region in the composite material tape may be, for example, the photographing code corresponding to the image slice. The alarm information may be sound, light, or a combination of sound and light.

Thus, this is beneficial for timely understanding the situations, such as location and area, of the metal leakage region in the composite material tape, which can assist in analyzing the causes of metal leakage and making timely adjustments to the relevant components of the laminator.

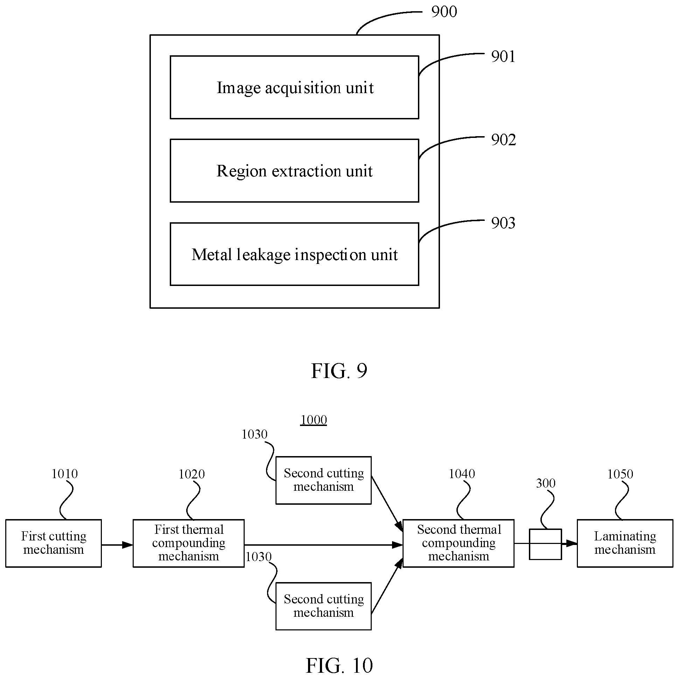

As shown in FIG. 9, an embodiment of this application further provides an apparatus 900 for detecting a defect of an electrode plate of a composite material tape. The apparatus includes:
an image acquisition unit 901, configured to use a camera apparatus to photograph a composite material tape being transported on a laminator to obtain an inspection image covering the composite material tape, where the inspection image includes an electrode plate body region;
a region extraction unit 902, configured to extract the electrode plate body region from the inspection image; and
a metal leakage inspection unit 903, configured to inspect the electrode plate body region to determine a metal leakage defect existing in the electrode plate body region.

Thus, the composite material tape being transported on the laminator can be inspected, so that whether there is metal leakage defect on the cathode electrode plate can be detected in real time in the production process of a laminated cell assembly. Thus, this improves the efficiency of detecting the metal leakage defect of the electrode plate; and in addition, timely detection of the metal leakage defect in the production process of the laminated cell assembly can also reduce material waste in subsequent production processes.

An embodiment of this application further provides an electronic device including at least one processor and a memory communicatively connected to the at least one processor, where the memory stores instructions that can be executed by the at least one processor, and the instructions are executed by the at least one processor to enable the at least one processor to perform the foregoing method for inspecting a cathode electrode plate of a composite material tape.

The foregoing electronic device of the embodiments of this application can perform an inspection on a composite material tape being transported on a laminator, so that whether a metal leakage defect exists on a cathode electrode plate can be detected in real time in the production process of a laminated cell assembly. Thus, this improves the efficiency of detecting the metal leakage defect of the electrode plate; and in addition, timely detection of the metal leakage defect in the production process of the laminated cell assembly can also reduce material waste in subsequent production processes.

As shown in FIG. 10, an embodiment of this application further provides a laminator 1000 including the foregoing system 300 for inspecting an electrode plate of a composite material tape. In some embodiments, the laminator 1000 includes a first cutting mechanism 1010, a first thermal compounding mechanism 1020, two second cutting mechanisms 1030, a second thermal compounding mechanism 1040, and a laminating mechanism 1050 which are arranged in sequence. The system 300 for inspecting an electrode plate of a composite material tape is arranged between the second thermal compounding mechanism 1040 and the laminating mechanism 1050.

The first cutting mechanism 1010 is configured to cut out a first electrode plate material segment from a first electrode plate material tape. The first thermal compounding mechanism 1020 is configured to thermally compound a first separator and a second separator with two side surfaces of the first electrode plate material segment to form a primary composite material tape. The two second cutting mechanisms 1030 are configured to cut out a second electrode plate and a third electrode plate from a second electrode plate material tape and a third electrode plate material tape respectively. The second electrode plate material tape and the third electrode plate material tape have a same polarity, which is opposite a polarity of the first electrode plate material tape. The second thermal compounding mechanism 1040 is configured to alternately thermally compound the second electrode plate and the third electrode plate with two side surfaces of the primary composite material tape to form a secondary composite material tape. The laminating mechanism 1050 is configured to laminate and cut the composite material tape to form a laminated assembly.

In the lamination process of the laminator, a metal leakage defect existing in the cathode electrode plate of the composite material tape can be detected, which is beneficial for relevant personnel to adjust the related components of the laminator in time. This can effectively control the flow-out of cell assemblies with a defect in the separator, as well as reduce material waste during production.

An embodiment of this application further provides a computer-readable storage medium storing computer instructions, where the computer instructions are configured to enable a computer to perform the method for inspecting a cathode electrode plate of a composite material tape according to any one of the foregoing embodiment of this application.

An embodiment of this application further provides a computer program product including a computer program, where when the computer program is executed by a processor, the method for inspecting a cathode electrode plate of a composite material tape according to any one of the foregoing embodiments is implemented.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A method for inspecting a cathode electrode plate of a composite material tape, comprising:
using a camera apparatus to photograph a composite material tape being transported on a laminator to obtain an inspection image covering the composite material tape, wherein the inspection image comprises an electrode plate body region;
extracting the electrode plate body region from the inspection image; and
inspecting the electrode plate body region to determine a metal leakage defect existing in the electrode plate body region.

2. The method according to claim 1, wherein the inspecting the electrode plate body region to determine a metal leakage defect existing in the electrode plate body region comprises:
inspecting based on a pixel value of the electrode plate body region.

3. The method according to claim 2, wherein the inspecting based on a pixel value of the electrode plate body region comprises:
determining whether the electrode plate body region comprises at least one suspected defect region, and a pixel value of any pixel in each suspected defect region is within a first pixel value range; and
in response to determining that the electrode plate body region comprises at least one suspected defect region and that the at least one suspected defect region meets a preset condition, determining that a metal leakage defect exists in the electrode plate body region.

4. The method according to claim 3, wherein the preset condition comprises: an area of any one of the suspected defect regions is greater than a preset threshold.

5. The method according to claim 3 or 4, wherein the determining whether the electrode plate body region comprises at least one suspected defect region comprises:
in the electrode plate body region, obtaining a plurality of abnormal pixels with pixel values within the first pixel value range; and
dividing the plurality of abnormal pixels so that adjacent pixels in the plurality of abnormal pixels are located in at least one suspected defect region which is independently connected.

6. The method according to any one of claims 1 to 5, wherein the camera apparatus is a line-scan camera, and the inspection image is a continuously scanned image of the composite material tape being transported on the laminator, and the extracting the electrode plate body region from the inspection image comprises:
extracting at least one image slice from the inspection image; and
extracting the electrode plate body region from the image slice.

7. The method according to any one of claims 1 to 6, wherein the inspection image further comprises a separator region surrounding the electrode plate body region, a backup roller region at least partially surrounding the separator region, and a plurality of tab regions located at two sides of the separator region, and the extracting the electrode plate body region from the inspection image comprises:
at least based on pixel values of a plurality of pixels in the inspection image, extracting the electrode plate body region from the inspection image.

8. The method according to claim 7, wherein the at least based on pixel values of a plurality of pixels in the inspection image, extracting the electrode plate body region from the inspection image comprises:
based on a first pixel threshold corresponding to the backup roller region, removing the backup roller region from the inspection image to obtain a first intermediate image;
extracting, from the first intermediate image, an image of a largest rectangular region inscribed with an edge of the first intermediate image, as a second intermediate image to remove the plurality of tab regions; and
based on a second pixel threshold corresponding to the electrode plate body region, extracting the electrode plate body region from the second intermediate image.

9. The method according to any one of claims 1 to 8, wherein the using a camera apparatus to photograph a composite material tape being transported on a laminator to obtain an inspection image covering the composite material tape comprises:
using the camera apparatus to photograph each side of the composite material tape being transported on the laminator to obtain the inspection image covering the composite material tape.

10. The method according to any one of claims 1 to 9, further comprising:
in response to determining that a metal leakage defect exists in the electrode plate body region, outputting an inspection result, wherein the inspection result comprises at least one of position information of the electrode plate body region in the composite material tape and an area of the electrode plate body region.

11. An apparatus for inspecting a cathode electrode plate of a composite material tape, comprising:
an image acquisition unit, configured to use a camera apparatus to photograph a composite material tape being transported on a laminator to obtain an inspection image covering the composite material tape, wherein the inspection image comprises an electrode plate body region;
a region extraction unit, configured to extract the electrode plate body region from the inspection image; and
a metal leakage inspection unit, configured to inspect the electrode plate body region to determine a metal leakage defect existing in the electrode plate body region.

12. An electronic device, comprising at least one processor and a memory communicatively connected to the at least one processor, wherein
the memory has instructions stored thereon that are executable by the at least one processor, and the instructions, when executed by the at least one processor, enables the at least one processor to perform the method according to any one of claims 1 to 10.

13. A system for inspecting a cathode electrode plate of a composite material tape, comprising:
at least one camera apparatus, configured to photograph the composite material tape being transported on a laminator; and
the electronic device according to claim 12.

14. The system according to claim 13, wherein:
the at least one camera apparatus comprises a first line-scan camera configured to photograph a first side surface of the composite material tape and a second line-scan camera configured to photograph a second side surface of the composite material tape opposite the first side surface; and
the system further comprises a first line light source for providing illumination to an image acquisition region of the first line-scan camera and a second line light source for providing illumination to an image acquisition region of the second line-scan camera.

15. The system according to claim 14, further comprising:
a first backup roller, wherein the first backup roller is configured to abut against the second side surface of the composite material tape in the image acquisition region of the first line-scan camera;
a first encoder connected to the first backup roller, wherein the first encoder is configured to send a pulse signal to the first line-scan camera as the composite material tape progresses on the first backup roller, so as to trigger the first line-scan camera to photograph the first side surface of the composite material tape line by line;
a second backup roller, wherein the second backup roller is configured to abut against the first side surface of the composite material tape in the image acquisition region of the second line-scan camera; and
a second encoder connected to the second backup roller, wherein the second encoder is configured to send a pulse signal to the second line-scan camera as the composite material tape progresses on the second backup roller, so as to trigger the second line-scan camera to photograph the second side surface of the composite material tape line by line.

16. A laminator, comprising the system according to any one of claims 13 to 15.

17. A computer-readable storage medium having computer instructions stored thereon, wherein the computer instructions are configured to enable a computer to perform the method according to any one of claims 1 to 10.

18. A computer program product, comprising a computer program, wherein when the computer program is executed by a processor, the method according to any one of claims 1 to 10 is implemented.
